Europäisches Patentamt

European Patent Office

Office européen des brevets

(11) Publication number: **0 398 437**

**A1**

## EUROPEAN PATENT APPLICATION

(21) Application number: 90201232.7

(22) Date of filing: 14.05.90

(51) Int. Cl.5: **B01D 29/11, B01D 29/54, B01D 29/84**

(30) Priority: 18.05.89 NL 8901241

(43) Date of publication of application:
22.11.90 Bulletin 90/47

(84) Designated Contracting States:
AT BE CH DE DK ES FR GB GR IT LI LU NL SE

(71) Applicant: NEDERLANDSE ORGANISATIE VOOR TOEGEPAST-NATUURWETENSCHAPPELIJK ONDERZOEK TNO
Juliana van Stolberglaan 148
NL-2595 CL The Hague(NL)

(72) Inventor: **van Kuijk, Albert**
**Brugakker 10-18**
**3704 KT Zeist(NL)**
Inventor: **Luggenhorst, Hendrik Jan**
**Broekweg 13**
**7451 MJ Holten(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Device, suitable for the continuous recovery of a product in suspension, as well as a process for the continuous recovery of a product in suspension with the aid of the said device.

(57) The invention concerns a device and a process incorporating the device respectively, for the recovery of a product in suspension, which device is characterized by a hollow column which delimits a concentration zone, whereby the internal cross-section of the column, perpendicular to the axis, is constant and the said column is equipped at one end with organs for the inlet of suspension and close to the other end of the column, which is open, it is equipped with one or more filters and organs respectively, for the outlet of suspension liquid passed through the filters and an organ to create an under-pressure on the outlet side of the filters.

fig-3

**Device, suitable for the continuous recovery of a product in suspension, as well as a process for the continuous recovery of a product in suspension with the aid of the said device.**

The invention concerns a device, which is suitable for the continuous recovery of a product in suspension.

A similar device is for instance, known from the Netherlands Patent Application 86.00793. More especially, the device which is described in this Netherlands Patent Application, is reproduced in Fig. 1 and consists of a reservoir 1, to which a suspension inlet pipe 2, a filter outlet pipe 3, an outlet pipe for the extracted solid matter 4, a gas inlet pipe 5, a gas outlet pipe 6 and a compressed gas inlet pipe 7, are connected. Inside the reservoir 1, is a cylindrical wall 8, which is partially closed at one end by a ring-shaped plate 9, in the centre of which is an opening 10, while the other end of the said reservoir is closed by means of the plate 11, which is connected to the disk 12 and the said disk is rotatable and supported by means of a fixed bearing 13. Between the reservoir 1 and the disk 12, there is another closing means, 14.

Within the cylindrical wall 8, the filter elements 15, are contained, which also have approximately the shape of a cylindrical mantle and which are supported by the wall 8, by means of radially oriented supports which extend over the length of the filter elements 15, to create the spaces 17. The said supports are connected to axially oriented supports 18, which extend between the end plate 11 and the plate 19 which is parallel to the said plate, to create the channels 20.

Each of the channels 20 is connected to a drilled hole 21 in the disk 12. When a drilled hole 21 is to make a possible connection with one of the pipes 3, 6 or 7, the surface of disk 12 is in contact with a disk 22, which is connected to the reservoir 1 and which supports the said pipes 3, 6 and 7. Within the cylindrical wall 8, a trough 23 is incorporated, which is connected to the abovementioned outlet pipe 4. It is possible to incorporate a transport organ 24 in this trough 23.

When the abovementioned device is in operation, the cylinder 8, 9, 11 with the filter elements 15 contained therein, must be rotated and a suspension is introduced via pipe 2. Via the inlet pipe 5, gas, such as air, can be introduced into the reservoir 1, to bring the suspension under pressure, so that this can be pressed more easily through the filter elements 15. The resultant filtrate is drained off via the channels 17, 20 and 21 and the said pipe 21 is then connected to the filtrate outlet pipe 3.

With further rotation, the produced filter residue 25 reaches a position above the filtrate and the gas in the reservoir will flow through the filter residue and via the channels 17, 20 and 21 the gas will arrive in the gas outlet pipe 6. The gas outlet pipe 6, can be connected to more than one drilled hole in the disk 22, so that the drying of the filter residue can take place over a greater rotation angle of the cylinder 8 than this rotation during filtration. When the dried filter residue has reached its highest point, compressed gas is introduced through the channel 17 which is then at its highest point, via the pipe 7, whereby the filter residue is blown away from the filter element 15 so that it is deposited into the trough 23 or into the transport organ present therein.

To summarize, with reference to the Netherlands Patent Application 86.00793 referred to above, it may be observed that there is the disadvantage that the device is somewhat complicated and that in addition, it is equipped with rotating components. Furthermore, the processing capacity of such a device is considered to be inadequate for most applications.

Other known prior art techniques for the recovery of materials in suspension, are the application of a centrifugal device or of a filtration device, both of which are capable of producing a product having a substantial quantity of solid matter. With respect to a centrifugal device, it is observed that as in the case of the device in the abovementioned Netherlands Patent Application 86.00793, it is complicated and incorporates rotating components and in addition, cannot easily be implemented for the continuous recovery of a product in suspension.

With respect to the filtration device, attention must be drawn to the fact that although this need not incorporate moving components, it cannot be utilized for continuous processing.

Furthermore, in the U.S. patent 2.813.781 a method for the execution of processes in a cross-current such as a washing process, between a suspension of granular solid particles and a liquid is described. In this process, a vertical column is implemented. According to this U.S. patent, the solid particles are transported as a moving bed through the column, whereby it is ensured that the pressure developed by and with the suspension fluid flowing with the solid particles, is greater than the pressure developed by the liquid flowing in the cross-current. Both the types of liquid are passed through one or more filters located in the column wall, which are incorporated between the top end and lower end of the column. The product thus obtained at the end of the column, of solid particles, often contains an undesirably high liquid content. More especially, the suspension liquid flowing with the granular solid particles is usually pumped into the top end of the column, while the liquid in the cross-current is forced through a filter incorporated at the lower end of the column wall. According to the U.S. patent 2.813.781 the column therefore should comprise both at the outlet side for the solid particles a filter for the inlet of the liquid in the cross-current incorporated in the column wall and at least another filter at another location in the column wall for the outlet of the flowing suspension liquid c.q. the liquid flowing in the cross-current. Since in this U.S. patent, mention is only made of filters incorporated in the column wall, the possibilities of scaling up of processes implementing this type of column are limited.

The German patent 1.197.421 describes a vertically placed filter column for the continuous filtration of beer dregs from wort. The filters are located over the entire length of the column. The lower end of the filter column is not open; a screw regulates the outlet of the beer dregs.

The Swiss patent 487.910 describes a device which is not open at the lower end and comprises filter tubes, which filter throughout the entire length. According to the method described in the Swiss patent, the flow rate of the liquid to be filtered, vertically onto the filter surface, must be adjusted so low that the filter cannot be clogged up by the particles present in the liquid.

Finally, in the U.S. patent 1.812.773 a filtration device is described which is operated discontinuously. After the filter is full of filter residue, the filtration is stopped and the filter residue is removed from the filter with the aid of compressed air.

Taking the foregoing into consideration, Applicant has searched for a device of simplified construction, which does not contain any moving components, is open on the product outlet side and is still suitable for the recovery of a product in suspension on a continuous basis.

It was found that the abovementioned goal can be achieved with a device which is characterized by a hollow column which delimits a concentration zone, whereby the internal cross-section of the column, perpendicular to the axis, is constant and one end of the said column, is equipped with organs for the inlet of suspension and close to the other end of the column, which is open, is equipped with one or more filters and organs respectively, for the outlet of suspension liquid passed through the filters as well as an organ to create an under-pressure on the outlet side of the filter(s) present.

The abovementioned expression, "...close to the other end of the column..." refers to the position of the filter or filters, which filters are located on the reverse half of the suspension inlet side, advantageously in the furthest removed quarter of the column and whereby the distance between the underside of the filter or filters to the end of the column, is preferably 1-20% of the column length.

More especially, the suspension liquid is separated from the suspension by the filters and removed from the column by the application of an under-pressure on the outlet side of the filters. Advantageously the under-pressure applied at the filters is regulated in such a way that besides the suspension liquid, air is also led from the open end of the column via the filter residue through the filter. In this way an optimum drying of the filter residue is achieved. The filters implemented in the column can be executed in the shape of one or more filter tubes present in the column (the internal filters) or can be incorporated in the wall of the column (the external filters).

As stated above, the internal filters can with advantage be executed in the shape of tubes with a constant external diameter, which extend from one end of the column in the direction parallel to the axis of the column and whereby in the wall of each tube at least one filter is incorporated, which constitutes a direct connection between the inside of the tube and the inside of the column. In the event that several filter tubes are present, these are equally spaced throughout the cross section of the column.

In addition to the possibility that the filters are internally incorporated, the filters can alternatively be incorporated in the wall at the end of the column. Furthermore, there is the possibility that the filters can be incorporated internally as well as in the wall of the column.

As stated, the filter which for instance, is located in a central filter tube, is incorporated immediately above the entirely open end of the column. The distance between the filter and the lower end of the column is relatively small. By increasing this distance, the time taken for the packed bed to dry can be increased, which will result in a dryer product.

The air forced through the filter residue, displaces a part of the liquid which is still present between the solid particles of the packed bed. So, in the device according to the invention, in addition to the outlet of the suspension liquid, there is also a removal of the suspension liquid still remaining in the filter residue. It has been observed that the degree to which the filter residue is dried, is dependent not only on the under-pressure which is applied at the filters, but also on the speed at which the bed is transported.

As stated, the driving force for the bed transport is determined by the pressure drop applied over the bed, which is caused by the removal of the filtrate via the bed. This driving force is dependent on the bed height, the quantity of filtrate which needs to be removed and the size of the particles in the packed bed. This driving force must overcome the frictional resistance of the packed bed in the column. In certain

3

circumstances, the driving force can be so great that it is necessary to incorporate an additional transport resistance in the column, in order to avoid shooting through of the packed bed. Such a transport resistance can be realized in several ways. One of these possibilities is to reduce the internal diameter of the filter cavity at the lower end of the column. It is advantageous to achieve this reduction at the lower end of the column, by constructing the said part of the column in a conical shape. In the case of said construction, the diameter of the lower end of the column is 1-10% less than the diameter of the rest of the column. Another method to create the additional transport resistance of the packed bed in the column, is to introduce a conical shaped extension piece under the filter in the central filter tube, with the understanding that the diameter of the conical extension piece is greater than the diameter of the filter tube. More especially, this ratio is 1-20%. The incorporation of an increased transport resistance of the packed bed in the column, according to the abovementioned methods, has been proved in tests to be adequate for the regulation of the transport of the packed bed, as desired.

Furthermore, the device according to the invention can be equipped at the open lower end with a gas-tight chamber, which chamber is equipped with organs for the outlet of the recovered suspension particles and the inlet of a gas stream.

This gas stream, need not, as in the case of an open end of a column, constitute environmental air, but could equally be conditioned (hot) air, an inert gas or another specific gas or vapour.

Although in the case of an open end of the column the environmental air enters the column via the lower end of the packed bed, the inlet of the gas stream can also take place via organs located in the column wall and at such a location, that these are past the filters, when seen from the viewpoint of the direction transport of the suspension particles.

For the scaling up of the device according to the invention, it is possible to greatly increase the diameter of the column. For instance, a device with a column diameter of 60 mm. which for instance, is equipped with one central filter tube with a diameter of 22 mm. can be scaled up to a column with a diameter of for instance, 150 mm. or 300 mm. In fact, in such large devices, the presence of one central filter tube will be inadequate to drain off the filtrate efficiently and/or to dry the bed thoroughly over its entire area. In order to counteract these shortcomings, several filter tubes are implemented which are equally distributed throughout the cross-section area of the column. For instance, in a column of 150 mm. diameter, 7 internal filter tubes and in a column of 300 mm. diameter, 19 internal filter tubes are incorporated. In addition to the internal filter tubes, filters can also be incorporated in the column wall.

Furthermore, there is also the possibility that de column with a substantial diameter after the zone containing the organs for the inlet of suspension, is divided into more than one concentration zone, in which concentration zone the internal and external filters respectively, are then located.

Before starting up the device according to the invention, it is of course necessary to close the lower end of the column with for instance, a cover plate. As soon as a packed bed has been formed between the filters by the removal of suspension liquid via the filters and the under-pressure built up at the filters is sufficiently high, the lower end of the column is opened by removing the cover plate. Hereby the packed bed in the column is built up to the extent that the driving force for transport is capable of overcoming the transport resistance or the frictional resistance of the packed bed in the column. At that time, the packed bed is set in motion, with the advantage, that it will transport at a constant speed. This transport speed must be equal to the speed at which the bed is built up on the upper side, so that a stable situation is reached.

For the sake of completeness, it is pointed at the European Patent 97.405 of Applicant, in which a device for the concentration of a suspension of crystals is described. This device contains a hollow cylindrical shaped column, which delimits a concentration zone and whereby the internal cross-section of the column, perpendicular to the axis, is constant. One end of the column is equipped with organs for the inlet of suspension and close to the other end of the column, with one or more filters, organs for the outlet of the liquid passed through the filters, as well as organs for the outlet of the concentrated suspension. These latter organs contain a scraper organ for the disintegration of the concentrated suspension and organs for the cross-current washing of the said suspension with a washing fluid. The product which has been washed with this device is finally removed as suspension. Since a relatively dry product is demanded for several applications, the product produced by the abovementioned device cannot be considered for such applications.

The enclosed figures illustrate on the one hand, a couple of devices according to the prior art and on the other hand, a number of embodiments of the device according to the invention.

Fig. 1 is a schematic representation of a longitudinal cross-section of the device according to the Netherlands Patent Application 86.00793.

Fig. 2 is a schematic representation of the device according to the European Patent 97.405.

Fig. 3 is a schematic representation of a device according to the invention.

4

Fig. 4 is a schematic representation of a filter chamber of a device according to the invention.

Fig. 5a is a schematic cross-section of a device according to the invention, which is equipped with seven internal filters.

Fig. 5b shows the cross-section Vb-Vb of the device as reproduced in Fig. 5a.

Fig. 6a shows a schematic cross-section of a device according to the invention, which is equipped with nineteen internal filter tubes.

Fig. 6b shows the cross-section VIb-VIb of the device as reproduced in Fig. 6a.

Fig. 7 shows a schematic representation of a device according to the invention, which is equipped with one external outlet for the suspension liquid and an additional inlet for gas.

Fig. 8 shows a device according to the invention, which is equipped with a gas-tight chamber at the open end of the column.

Fig. 9 shows a device according to the invention, in which the suspension zone is divided into two cylindrical concentration zones.

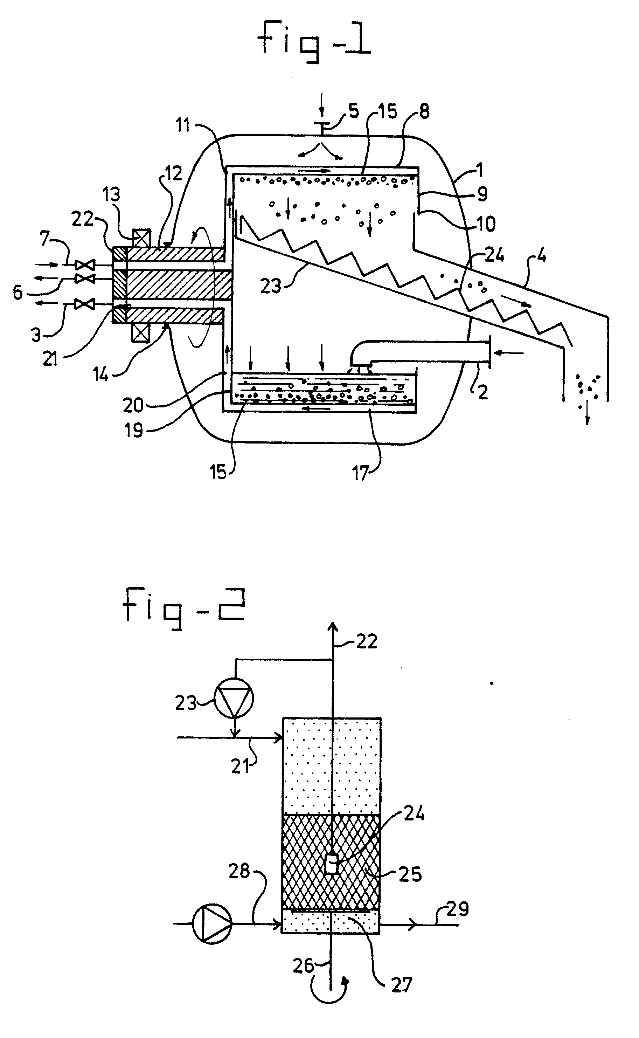

With reference to the Figures 1-9, the following can be further clarified:

The device shown in Fig. 1 has already been covered in the description of the Netherlands Patent Application 86.00793, so that a further explanation here would be superfluous.

Fig. 2 is a reproduction of the washing column according to the European Patent 97.405 in which the following components are schematically represented : 21 the inlet pipe for the suspension, 22 the outlet pipe for the filtrate, 23 the control circuit, 24 the filter, 25 the packed bed, 26 the disintegrator, 27 the re-slurry section, 28 the re-slurry liquid inlet and 29 the product outlet pipe.

Fig. 3 is a reproduction of a device according to the invention in which the following components are schematically represented : 301 the suspension inlet pipe, 302 the filtrate outlet pipe from an internal filter tube, 303 an outlet pipe for the filtrate from an external filter, 304 a vacuum pump, 305 a liquid gas separator, 306 an air outlet pipe, 307 a filtrate outlet pipe, 308 an internal filter, 309 an external filter, 310 a receptacle for the recovered product and 311 an outlet pipe for the recovered solid matter. The diameter of such a column filter according to the invention, can for example, be 60 mm.

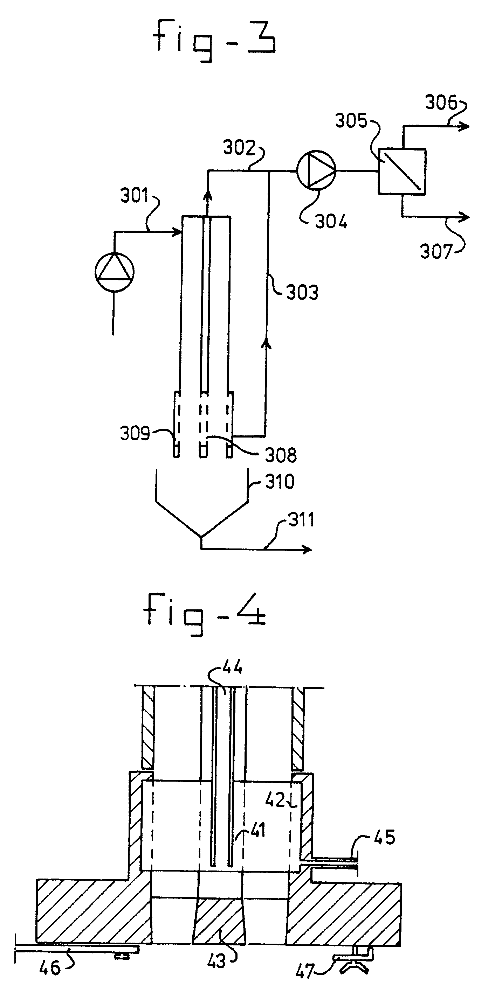

Fig. 4 is a reproduction of a filter section of a column filter with for example, a diameter of 60 mm. in which the following components are schematically represented : 41 an internal filter with for example, a height of 40 mm. 42 an external filter with for example, a height of 40 mm. 43 a cone with for example, a height of 20 mm. 44 an outlet pipe for the filtrate and the air from the internal filter, 45 an outlet pipe for the filtrate and the air from the external filter, 46 a cover plate for starting up of the column filter and 47 a locking ring for the aforementioned cover plate.

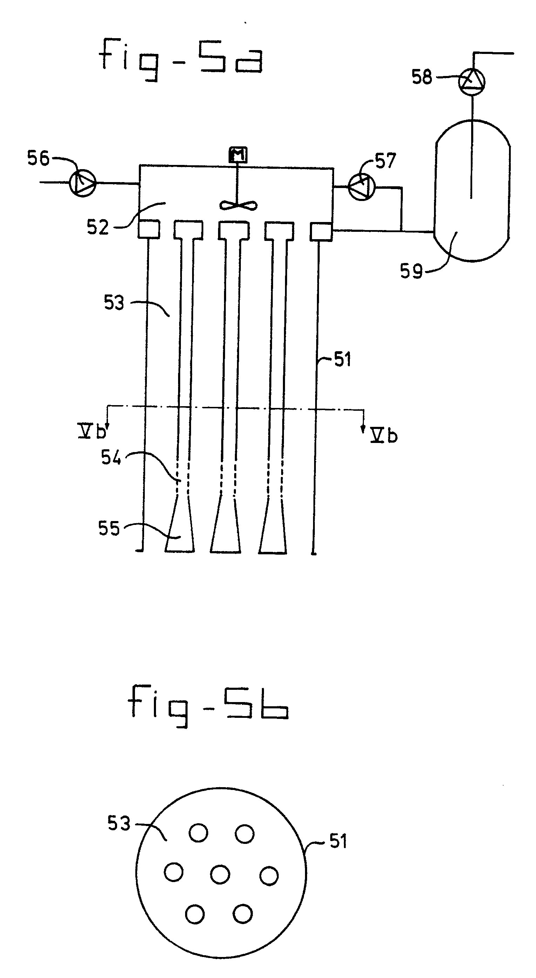

Fig. 5a is a reproduction of a device according to the invention with an enlarged diameter of for example, 150 mm. in which the following components are schematically represented : 51 the filter device itself, 52 the inlet section, 53 the condensation and transport sections, 54 the filter section with a height of for example, 40 mm. 55 the conical outlet section with a height of for example, 100 mm. 56 the feed pump for the inlet of a suspension, 57 the control pump, 58 the (vacuum) pump and 59 a buffer vat/under-pressure regulator.

Fig. 5b is a reproduction of the distribution of the seven internal filter tubes with for example, a diameter of 20 mm. across the cross-section Vb-Vb of the column.

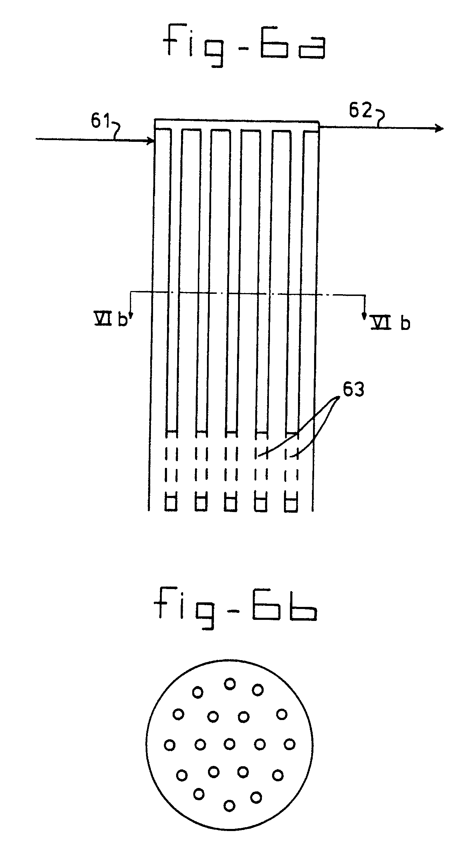

Figs. 6a and 6b respectively, are reproductions of a 300 mm. column filter with 19 filter tubes in which the following components are schematically represented : 61 the inlet for the suspension, 62 the filtrate and air outlet pipe from the internal filters and 63 the filters themselves. Fig. 6b shows the cross-section VIb-VIb of the column filter with a diameter of 300 mm. with the associated distribution of the 19 filter tubes.

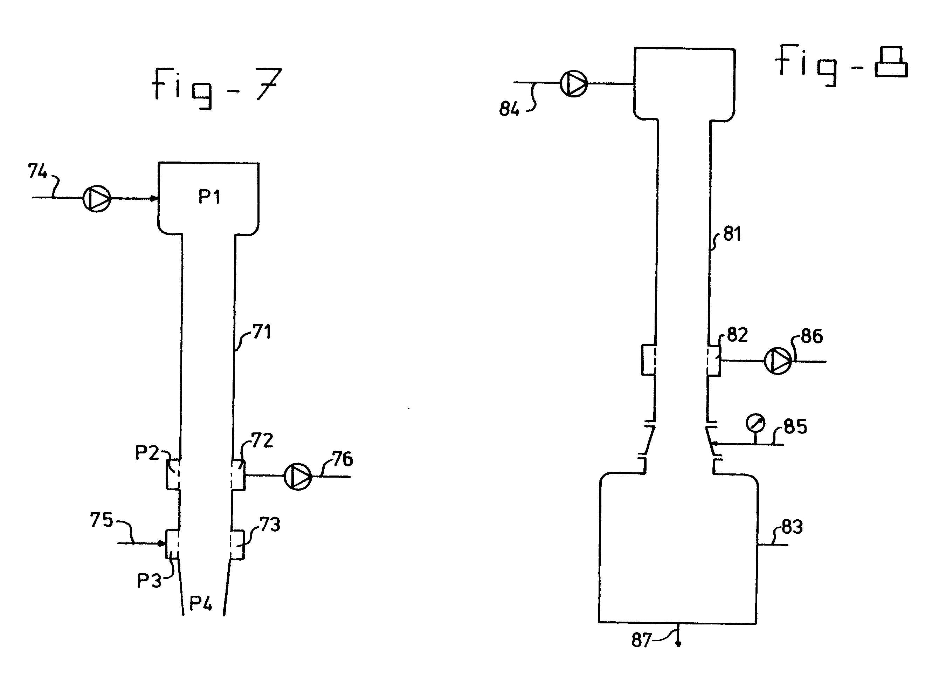

Fig. 7 is a reproduction of a column filter with an external filter for the filtrate and an additional external filter for the inlet of gas. In this figure, the following components are schematically represented : 71 the column filter equipment itself, 72 the filter for the liquid and gas outlets, 73 the filter for the gas inlet, 74 the suspension input pipe, 75 the gas input pipe and 76 the liquid and gas outlet pipe. The pressures P1, P2, P3 and P4 are the pressures at their respective locations. Hereby the pressure P1 on the suspension inlet side is higher than P2 at the outlet filter. Furthermore, the pressure P3 at the air input filter is also higher than P2 at the outlet filter. For instance, these pressures can have the following values: P1 = 200 kPa, P2 = 50 kPa, P3 = 150 kPa and P4 = 100 kPa.

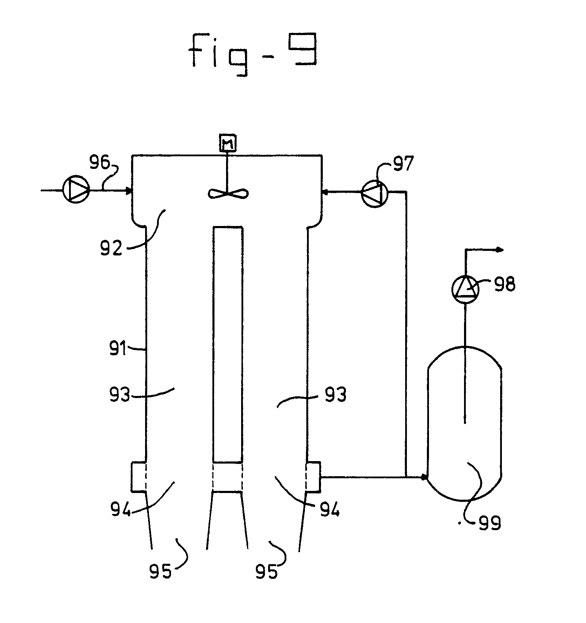

Fig. 8 is a reproduction of a device according to the invention, whereby the outlet side is not in contact with the environmental air, but is closed in order to enable a higher pressure on the outlet side to be regulated. In this Fig. 8 the following components are represented : 81 the column filter equipment itself, 82 the filter for the liquid and gas outlets, 83 a means for increasing the pressure on the outlet side, 84 the suspension input pipe, 85 the gas input pipe, 86 the liquid and gas outlet pipes and 87 the outlet pipe for the solid particles.

Finally, Fig. 9 is a representation of a large scale execution of the device according to the invention. This increase in scale is realized by the parallel switching of two columns with for example, an internal diameter of 50 mm.

In this Fig. 9 the following are schematically represented : 91 the filter device, 92 the inlet section of the suspension liquid including the stirrer, 93 the condensation and transport sections, 94 the filter section, 95 the conical outlet section, 96 the feed pump for the suspension, 97 the control pump, 98 the (vacuum) pump and 99 the buffer vat/under-pressure regulator.

Furthermore, the invention concerns a process for the recovery of a product in suspension, according to which with the aid of the device described above according to the invention a suspension is introduced into the column, thereafter the suspension liquid is passed through the filters until a filter residue is formed and the derived filter residue is dried by the application of an under-pressure on the outlet side of the filters with gas, preferably air and thereafter, under the influence of a pressure drop over the filter residue, it is preferably continuously removed from the column. Since the lower end of the column is open, the environmental air functioning as drying gas, will enter the packed bed through this end. Actually, there is also the possibility of introducing the drying gas via filters incorporated in the column wall. As mentioned, these filters are incorporated in the wall at the lower end of the column and seen in the outlet direction of the packed bed, after the filters for the outlet of the suspension liquid.

A vacuum pump, such as a watering pump, can be implemented to create the under-pressure required for the introduction of drying gas on the outlet side of the filters. The preferred method for the recovery of a product in suspension, is to ensure that the evacuation of the packed bed keeps pace with the formation of the packed bed and only then will it be possible to ensure that continuity of the process according to the invention is guaranteed.

The invention is further explained on the basis of the following tests. These tests may not limit the invention in any way. In the execution of the filtration tests in the examples, a test mixture was used, consisting of approx. 20 wt.% PVC particles in water. The PVC product (polyvinylchloride product) had the following particle constitution:

| Path (μm) | | Particles (wt.%) | $d_i$ (μm) |
|---|---|---|---|
| From | To | | |
| 305 | 242 | 1.6 | 273.5 |
| 242 | 192 | 21.5 | 217 |
| 192 | 152 | 48 | 172 |
| 152 | 121 | 23 | 136.5 |
| 121 | 96 | 4.8 | 108.5 |
| 96 | 76 | 1.0 | 86 |
| 76 | 61 | 0.1 | 68.5 |
| | <61 | 0 | <61 |

$$\text{average diameter} = \frac{100}{\dfrac{1.6}{273.5} + \dfrac{21.5}{217} + \dfrac{48}{172} + \dfrac{23}{136.5} + \dfrac{4.8}{108.5} + \dfrac{1}{86} + \dfrac{0.1}{68.5}} = 164 \ \mu m$$

After every test, a sample was taken and dried with the aid of an IR lamp. On the basis of the weight loss, the percentage of dry solid material in the filter residue was calculated.

## Comparative example 1

The abovementioned PVC suspension of approx. 20 wt.% dry particles, was filtered with the aid of a Büchner funnel (paper filter) with a diameter of 110 mm. The filtration time was 60 seconds and the pressure on the filtrate outlet side was 90 kPa. The filter residue was 20 mm. thick. The dry solid content was 77.8 wt.%.

Comparative example 2

A tubular centrifugal device was implemented to centrifuge a sample of the abovementioned PVC suspension, for a duration of 60 seconds. The ròtational speed of the centrifuge was 5,200 rev/min. (acceleration 4,500 m/s$^2$). The dry solid content of the product obtained was 78.9 wt.%.

Example 1

The abovementioned PVC suspension was added to the device according to Fig. 3. The height of the filter equipment was 430 mm. and internal diameter was 60 mm.

The lengths of the external and internal filters were 37.5 mm. and 31 mm. respectively and the diameters were 62.5 mm. and 20 mm. respectively. The distance from the lower end of the filters to the end of the column was 20 mm. The inlet pressure was 175 kPa and the pressure on the filtrate outlet side was 40 kPa. The filtration capacity was 5 liters filter residue per hour. The dry solid content of the recovered product was 77.4 wt.%.

It follows from the abovementioned tests, that with the filtering device according to the invention, a filter residue with the same degree of dry solid content can be obtained on a continuous basis as with the conventional loading techniques, such as with the aid of a Büchner filter and a tubular centrifugal device.

**Claims**

1. Device, suitable for the recovery of a product in suspension, characterized in a hollow column, which delimits a concentration zone, whereby the internal section of the column perpendicular to the axis, is constant, which column is equipped at one end with organs for the inlet of suspension and close to the other end of the column, which is open, is equipped with one or more filters or organs respectively, for the removal of the suspension liquid passed through the filters and with an organ to create an under-pressure on the outlet side of the filters.

2. Device according to claim 1, characterized in that the internally incorporated filters are executed in the shape of tubes of a constant external diameter, which extend from one end to the other end of the column in a direction parallel to the axis of the column and that in the wall of each tube, at least one filter is incorporated, which forms the direct connection between the inside of the tube and the inside of the column.

3. Device according to claim 2, characterized in that the column has a circular cross-section and in the event that several filter tubes are present, these are evenly distributed throughout the cross-section of the column.

4. Device according to claim 1, characterized in that at the other end of the column, one or more filters are incorporated in the wall of the said end.

5. Device according to one or more of the claims 1-4, characterized in that the filters are incorporated internally as well as in the wall of the column.

6. Device according to one or more of the claims 1-5, characterized in that the other end of the column has a conical shape, the diameter of which is smaller than the remainder of the column.

7. Device according to claim 6, characterized in that the diameter of the other end of the column is 1-10% less than the diameter of the remainder of the column.

8. Device according to one or more of the claims 1-3 and 5-7, characterized in that the ends of the filter tube or filter tubes are of conical shape, with the understanding, that the diameter of the conical end is greater than the diameter of the tube.

9. Device according to claim 8, characterized in that the diameter of the conical end of the filter tube or filter tubes is 1-20% greater than the diameter of the filter tube.

10. Device according to one or more of the claims 1-9, characterized in that the organ for the outlet of suspension liquid passed through the filter or filters, is equipped with a pump to create the under-pressure.

11. Device according to one or more of the claims 1-10, characterized in that the column is equipped at the other end with organs for the inlet of a gas stream, which organs, seen in the transport direction of the suspension particles, are located after the filters.

12. Device according to one or more of the claims 1-11, characterized in that the open end of the column is equipped with a gas-tight chamber, which chamber is equipped with organs for the outlet of the recovered suspension particles and the inlet of a gas stream.

7

13. Device according to one or more of the claims 1-12, characterized in that the column after the zone which incorporates the organs for the inlet of suspension, is divided into more than one concentration zone.

14. Process for the recovery of a product in suspension, characterized in that a suspension is fed into the defined device in the claims 1-13, which suspension is thereafter concentrated by means of the outlet of suspension liquid via the filters into a filter residue, which residue is dried by subjecting it counter-currently to a drying gas and thereafter the dried residue is removed from the column.

15. Process according to claim 14, characterized in that the filter residue is removed from the column by creating a pressure drop over the filter residue.

16. Process according to claim 14 or 15, characterized in that environmental air is used as a drying gas.

17. Process according to one or more of the claims 14-16, characterized in that the under-pressure on the output side of the filters is created by means of a pump.

18. Process according to one or more of the claims 14-17, characterized in that the process for the recovery of a product in suspension, is continuously executed by adjusting the formation and removal respectively, of the filter residue.

EP 0 398 437 A1

fig-1

fig-2

# fig-3

# fig-4

# Fig-5a

# Fig-5b

EP 0 398 437 A1

fig-6a

61

62

Ⅵb

Ⅵb

63

fig-6b

fig-7

74

P1

71

P2  72

75  76

73

P3

P4

fig-8

84

81

82  86

85

83

87

EP 0 398 437 A1

# fig - 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 813 781  (T.S. MERTES)<br>* Column 2, lines 44-72; columns 3-6 * | 1,2,4,6,18 | B 01 D  29/11<br>B 01 D  29/54<br>B 01 D  29/84 |
| A | | 11 | |
| X | DE-B-1 197 421  (WIEGELWERK)<br>* Columns 3,4 * | 1,2,4,6,13,18 | |
| X | CH-A-  497 910  (TOSHIN SCIENCE)<br>* Columns 1-6 * | 1-3,6,10,17,18 | |
| X | US-A-1 812 773  (HUGH HARLEY CANNON)<br>* Pages 1-4 * | 1,3,6 | |
| A | | 8,11,12,14,16 | |
| A | DE-A-2 921 871  (SELWIG & LANGE)<br>* Figure 1 * | 5 | |
| A | US-A-3 319 437  (GOINS)<br>* Figures 1,4 * | 1-18 | |
| A | FR-A-1 352 915  (FIVES LILLE-CAIL)<br>* Pages 1,2 * | 1-18 | TECHNICAL FIELDS SEARCHED (Int. Cl.5)<br><br>B 01 D |
| A | DE-A-3 211 865  (GEWERKSCHAFT AUGUSTE VICTORIA)<br>* Figures 1,2 * | 1-18 | |

The present search report has been drawn up for all claims

| Place of search | Date of completion of the search | Examiner |
|---|---|---|
| THE HAGUE | 30-08-1990 | DE PAEPE P.F.J. |

EPO FORM 1503 03.82 (P0401)